# EUROPÄISCHE PATENTANMELDUNG

(11) **EP 3 447 707 A1**
(43) Veröffentlichungstag der Anmeldung: **27.02.2019**
(21) Anmeldenummer: 18000689.2
(22) Anmeldetag: 21.08.2018
(51) Int. Cl.: G06Q 20/40

(54) **DYNAMISCHES GENERIEREN EINES SICHERHEITSSCHLÜSSELS**

(30) Priorität: 25.08.2017 DE 102017008046
(71) Anmelder: Giesecke+Devrient Mobile Security GmbH, 81677 München (DE)
(72) Erfinder: Kluge, Stefan, 80997 München (DE)

(57) **Zusammenfassung**

Die vorliegende Erfindung ist gerichtet auf ein Verfahren zum dynamischen Generieren eines Sicherheitsschlüssels unter Verwendung eines einfach ausgestalteten Wertdokuments sowie eines mobilen Endgeräts. Mit der vorliegenden Erfindung ist es möglich, ein Sicherheitsmerkmal bereitzustellen, ohne dass hierbei umfangreiche Hardwareressourcen innerhalb des Wertdokuments notwendig wären. So wird beispielsweise erfindungsgemäß eine Batterie oder ein Display in dem Wertdokument vermieden. Die vorliegende Erfindung ist ebenfalls gerichtet auf eine entsprechend eingerichtete Systemanordnung zum Betreiben des vorgeschlagenen Verfahrens. Ferner wird ein Computerprogrammprodukt vorgeschlagen, mit Steuerbefehlen, welche das Verfahren implementieren bzw. die Systemanordnung betreiben.

## Beschreibung

Die vorliegende Erfindung ist gerichtet auf ein Verfahren zum dynamischen Generieren eines Sicherheitsschlüssels unter Verwendung eines einfach ausgestalteten Wertdokuments sowie eines mobilen Endgeräts. Mit der vorliegenden Erfindung ist es möglich, ein Sicherheitsmerkmal bereitzustellen, ohne, dass hierbei umfangreiche Hardwareressourcen innerhalb des Wertdokuments notwendig wären. So wird beispielsweise erfindungsgemäß eine Batterie oder ein Display in dem Wertdokument vermieden. Die vorliegende Erfindung ist ebenfalls gerichtet auf eine entsprechend eingerichtete Systemanordnung zum Betreiben des vorgeschlagenen Verfahrens. Ferner wird ein Computerprogrammprodukt vorgeschlagen, mit Steuerbefehlen, welche das Verfahren implementieren bzw. die Systemanordnung betreiben.

WO 2015/085100 A1 zeigt ein Verfahren, welches eine dynamische Sicherheitsinformation verwendet. Bei der Sicherheitsinformation handelt es sich um den sogenannten Card Verification Value CW, welcher auch als Card Validation Code CVC, bezeichnet wird.

Ferner ist ein sogenannter Time-based One-Time Password Algorithm bekannt, welcher ein Verfahren zur Erzeugung von zeitlich limitierten Einmalkennwörtern darstellt. Auch ist es u. a. bekannt, dynamisch eine Sicherheitsinformation, beispielsweise den Card Validation Code CVC, zu generieren, wobei gemäß herkömmlicher Verfahren sogenannte Smartcards verwendet werden, die einen Mikrocontroller und eine Ausgabeeinheit aufweisen. Bei der Ausgabeeinheit handelt es sich typischerweise um ein Display, welches den generierten Card Validation Code CVC anzeigt. So ist es bekannt, Transaktionen anhand des CVC zu authentisieren bzw. zu autorisieren. Da gemäß herkömmlicher Verfahren der CVC für jeden ersichtlich auf der Kreditkarte hinterlegt ist, besteht generell ein Bedarf an alternativen Verfahren, welche die Sicherheitsinformation nicht ohne Weiteres ersichtlich machen.

In herkömmlichen Verfahren wird zwischen Kreditkartenzahlungen unterschieden, die direkt am Verkaufsort, also am sogenannten "Point of Sale" stattfinden, und sogenannten Distanzzahlungen. Dies wird generell als "Card Present Transaction" oder andernfalls als "Card Not-Present Transaction" Anwendungsszenario bezeichnet. Bei einer Distanzzahlung befindet sich der Kunde nicht am Point of Sale und gibt eine Prüfinformation telefonisch bzw. online weiter. Dies kann bei einer Vor-Ort-Zahlung dadurch erfolgen, dass die Sicherheitsinformation von der Karte direkt ausgelesen wird. Da sich Unberechtigte Zugang zu der Kreditkarte verschaffen können und beispielsweise die statisch aufgedruckte CVC-Information auslesen können, gibt es Verfahren, die eine dynamische CVC derart bereitstellen, dass diese in einem vorbereitenden Schritt elektronisch erzeugt wird und lediglich eine vorbestimmte Dauer gültig ist. So wird die CVC mittels einer in der Kreditkarte verbauten Elektronik erzeugt und anhand eines Zeitstempels in ihrer Gültigkeit begrenzt.

Hierbei ist es jedoch besonders nachteilig, dass die Kreditkarte besonders aufwendig ausgestaltet werden muss, da entsprechend eine Batterie, ein Display, Mikrocontroller sowie ein Uhrenquarz vorzusehen ist. Somit stellen solche Verfahren generell zwar eine sichere Möglichkeit dar, einen Sicherheitsschlüssel zu erzeugen, wobei diese jedoch in technischer Sicht aufwendig sind. Typischerweise werden Kreditkarten in großer Stückzahl ausgegeben, und somit entsteht für den Hersteller ein erheblicher Aufwand.

Es ist somit eine Aufgabe der vorliegenden Erfindung, ein Verfahren zum dynamischen Generieren eines Sicherheitsschlüssels vorzuschlagen, welches es ermöglicht, dass das verwendete Dokument technisch einfach ausgestaltet werden kann und zudem das Erzeugen des Schlüssels besonders sicher erfolgt. Zudem soll für den Anwender ein geringer Aufwand entstehen, da dies ansonsten die Akzeptanz eines solchen Verfahrens beeinträchtigen würde. Ferner ist es eine Aufgabe der vorliegenden Erfindung, eine Systemanordnung vorzuschlagen. Ferner soll ein Computerprogrammprodukt bereitgestellt werden, mit Steuerbefehlen, welche das Verfahren implementieren bzw. die Systemanordnung betreiben.

Die Aufgabe wird gelöst mit den Merkmalen des Patentanspruchs 1. Weitere vorteilhafte Ausgestaltungen sind in den Unteransprüchen angegeben.

Demgemäß wird ein Verfahren zum dynamischen Generieren eines Sicherheitsschlüssels unter Verwendung eines einfach ausgestalteten Wertdokuments vorgeschlagen, umfassend ein Bereitstellen einer auf dem Wertdokument hinterlegten ersten Information an ein mobiles Endgerät mittels einer direkten Kommunikationsschnittstelle - beispielsweise über das kapazitive Display - zwischen dem Wertdokument und dem mobilen Endgerät, ein Erzeugen eines Sicherheitsschlüssels durch das mobile Endgerät in Abhängigkeit der bereitgestellten ersten Information, und einer, auf dem mobilen Endgerät, abgespeicherten zweiten Information und ein optisches Ausgeben des erzeugten Sicherheitsschlüssels durch das mobile Endgerät.

Das optische Ausgeben erfolgt vorzugsweise mittels eines Displays.

Das vorgeschlagene Verfahren erlaubt jederzeit ein dynamisches Generieren einer Sicherheitsinformation, welche alternativ zu dem statischen (auf die Karte permanent aufgedruckten) Card Validation Code CVC oder welche als der Card Validation Code CVC verwendet werden kann. Hierbei ist es besonders vorteilhaft, dass das dynamische Generieren nicht durch das Wertdokument an sich durchgeführt werden kann, sondern lediglich unter Verwendung des Wertdokuments durchgeführt wird. Hierbei ist es möglich, das Wertdokument einfach auszugestalten, was darauf abstellt, dass möglichst wenig Hardwareressourcen bereitgestellt werden müssen. So sind lediglich Komponenten vorzusehen, welche die erste Information bereitstellen. Somit ist es also nunmehr möglich, auf dem Wertdokument keinen Mikrocontroller, keine Batterie und kein Display vorzuhalten, was wiederum einen technischen Aufwand bedeuten würde.

Zum Ausführen des vorgeschlagenen Verfahrens ist es also notwendig, das Wertdokument vorzuhalten sowie ein mobiles Endgerät bzw. eine Vorrichtung zum Erzeugen des Sicherheitsschlüssels. Das Wertdokument kann beispielsweise als eine Kreditkarte, eine Smartcard oder aber auch als ein Passbuch vorliegen. Generell ist vorliegend jegliches Dokument geeignet, welches es ermöglicht, eine nicht-kontaktbehaftete Kommunikation kapazitiv mit dem Wertdokument bereitzustellen.

Hierbei ist es vorteilhaft, dass auf dem Wertdokument eine leitfähige Struktur vorgehalten wird, die die Information bereitstellt. Hierbei ist es nicht notwendig, dass die erste Information dynamisch erzeugt wird, sondern vielmehr sind auch statische Strukturen geeignet, die eine Information bereitstellen, welche vorzugsweise für das Wertdokument personalisiert ist. Somit ist eine direkte Kommunikationsschnittstelle zwischen dem Wertdokument und dem mobilen Endgerät im Kontext der vorliegenden Erfindung nicht derart zu verstehen, dass lediglich eine sichtbare, aufgedruckte Information optisch ausgelesen wird. Vielmehr soll die direkte Kommunikationsschnittstelle ermöglichen, dass die erste Information für den menschlichen Benutzer nicht sichtbar ist. Dies stellt ein weiteres Sicherheitsmerkmal dar.

Das mobile Endgerät verfügt zudem über eine zweite Information, welche ebenfalls vorzugsweise für das mobile Endgerät verfügbar ist. Bei der zweiten Information handelt es sich bevorzugt um einen Zeitstempel, bevorzugt eine Uhrzeit des mobilen Endgeräts. Somit ist es also möglich, dass die zweite Information variiert und bei einem ersten Durchlaufen des Verfahrens anders ausgestaltet wird, als bei einem zweiten Durchlaufen. Somit können beispielsweise Bezahlvorgänge anhand unterschiedlicher Informationen des mobilen Endgeräts autorisiert werden.

Das Erzeugen des Sicherheitsschlüssels erfolgt derart, dass die erste Information aus dem Wertdokument ausgelesen wird bzw. aktiv übermittelt wird und sodann Steuerbefehle ausgeführt werden, die in Abhängigkeit der ersten und der zweiten Information den Sicherheitsschlüssel erzeugen. Hierbei ist es möglich, dass eine Applikation auf dem mobilen Endgerät selbsttätig erkennt, dass die ersten Informationen bei der Erzeugung eines Sicherheitsschlüssels Verwendung finden sollen. So kann diese Applikation automatisiert nach einem Empfangen der ersten Information die zweite Information verarbeiten, den Sicherheitsschlüssel erzeugen und diesen ausgeben. Somit ist es also erfindungsgemäß möglich, dass ein Benutzer lediglich die Applikation starten muss, die das Wertdokument ausliest, und somit ohne weiteres Zutun den Sicherheitsschlüssel angezeigt bekommt. Dies steigert die Akzeptanz des vorgeschlagenen Verfahrens, da der Benutzer keinerlei weitere Verfahrensschritte ausführen muss und zumindest teilautomatisiert einen Sicherheitsschlüssel angezeigt bekommt.

Insgesamt ist das Verfahren vorteilhaft, da ein mobiles Endgerät stets von dem Benutzer vorgehalten wird und somit die Akzeptanz nicht beeinträchtigt wird. Somit ist es also möglich, die rechenintensiven Aufgaben durch das mobile Endgerät durchführen zu lassen und hierbei in besonders vorteilhafter Weise das Wertdokument technisch einfach auszugestalten.

Das Berechnen des Sicherheitsschlüssels kann anhand eines Algorithmus erfolgen, welcher beispielsweise anhand der ersten Information und der zweiten Information eine Pseudozufallszahl erstellt. Hierbei ist es möglich, dass die erste Information als ein sogenanntes Seed Verwendung findet. Anhand der beiden Informationen kann dann entweder durch das mobile Endgerät allein oder im Zusammenwirken mit einem Server der Sicherheitsschlüssel generiert werden. Hierzu kann der entsprechende Algorithmus auf dem mobilen Endgerät hinterlegt sein oder aber auch auf einem Server. Hierzu können herkömmliche Kommunikationsschnittstellen zwischen dem mobilen Endgerät und dem Server genutzt werden, welche beispielsweise eine mobile Datenkommunikation umfassen.

Das Ausgeben des Sicherheitsschlüssels erfolgt dann vorzugsweise mittels eines Displays des mobilen Endgeräts, woraufhin der Benutzer den Sicherheitsschlüssel an einem Kassensystem oder bei einem Onlinebezahlvorgang bereitstellen kann. Somit erfolgt das Ausgeben des Sicherheitsschlüssels also nicht mittels des Wertdokuments, wie es der Stand der Technik zeigt, sondern der Benutzer verwendet sein Mobiltelefon, um den Sicherheitsschlüssel anzuzeigen. Hierdurch wird ein Display auf dem Wertdokument überflüssig, und es muss lediglich eine Einrichtung auf dem Wertdokument vorhanden sein, welches die erste Information bereitstellt. Die vorliegende Erfindung ist nicht auf ein Mobiltelefon beschränkt, sondern vielmehr eignen sich jegliche tragbaren mobilen Endgeräte, wie beispielsweise ein Tablet oder ein Laptop.

Gemäß einem Aspekt der vorliegenden Erfindung liegt die direkte Kommunikationsschnittstelle als eine nicht-kontaktbehaftete Schnittstelle, d.h. eine galvanisch getrennte Schnittstelle vor (beispielsweise über NFC). Dies hat den Vorteil, dass ein weiterer Sicherheitsmechanismus vorgesehen wird, dadurch, dass das Wertdokument nicht über große Entfernungen ausgelesen werden kann.

Gemäß einem weiteren Aspekt der vorliegenden Erfindung erfolgt das Bereitstellen der ersten Information mittels eines Auslesens einer leitfähigen Struktur auf dem Wertdokument. Dies hat den Vorteil, dass ein vorgenannter Touchcode eingesetzt werden kann. Hierbei handelt es sich um eine nicht-sichtbare leitfähige Struktur, die sich mittels Druckverfahren auf jegliches Substrat aufbringen lässt. Somit ist es also möglich, jegliches Wertdokument zu verwenden und lediglich diese leitfähige Struktur aufzudrucken, ohne hierbei elektronische Komponenten innerhalb des Wertdokuments bereitzustellen. Somit kann das Wertdokument ein beliebiges Substrat wie beispielsweise Papier aufweisen, oder aber auch auf eine PVC-Karte aufgebracht werden. In Folge lassen sich also auch herkömmliche Wertdokumente wie Kreditkarten nachrüsten und erfindungsgemäß verwenden. Lediglich ein Beispiel für einen solchen leitenden Code ist die bereits bekannte Touchcode-Technologie der Firma T-Ink (bspw. WO2016/131963A1). Die vorliegende Erfindung ist jedoch nicht auf solch ein Produkt beschränkt, sondern vielmehr kann jegliche leitfähige Struktur auf ein Wertdokument aufgebracht werden und erfindungsgemäß verwendet werden. Beispielsweise kann eine leitfähige Struktur aufgebracht bzw. in der Kreditkarte angeordnet werden, welche nur dann einen Code erzeugt, wenn ein Nutzer mit einem Gliedmaß, beispielsweise einem Finger, mittelbar oder unmittelbar über die leitfähige Struktur fährt und so eine kapazitive Kopplung mit der Struktur erwirkt. Auf dem mobilen Endgerät kann hierzu eine Applikation hinterlegt werden, die das Bereitstellen der ersten Information mittels der leitfähigen Struktur erkennt und selbsttätig Steuerbefehle lädt, die anhand der ersten Information und der zweiten Information einen Sicherheitsschlüssel erzeugen.

Gemäß einem weiteren Aspekt der vorliegenden Erfindung erfolgt das Auslesen der ersten Information unter Verwendung eines kapazitiven Displays des mobilen Endgeräts. Dies hat den Vorteil, dass ein herkömmliches Smartphone, vorzugsweise mit Multitouch-Display, verwendet werden kann, welches der Benutzer typischerweise stets mit sich führt. So kann also ein herkömmliches Smartphone derart wiederverwendet werden, dass rechenintensive Steuerbefehle auf dieses Smartphone ausgelagert werden können und einfach mittels Auflegens des Wertdokuments auf das kapazitive Display die Information bereitgestellt werden kann. So wird vorzugsweise eine leitfähige Struktur auf dem Wertdokument verwendet, welches in Kontakt mit dem kapazitiven Display des mobilen Endgeräts gebracht wird. Somit kann mittels dieser Schnittstelle die erste Information von dem Wertdokument bzw. von der leitfähigen Struktur auf das mobile Endgerät übertragen werden.

Gemäß einem weiteren Aspekt der vorliegenden Erfindung stellt die erste Information einen Ausgangswert dar. Dies hat den Vorteil, dass die erste Information als ein sogenannter Seed Verwendung finden kann, und das Verfahren in Abhängigkeit dieses ersten Werts und dem bereitgestellten zweiten Wert (z.B. Uhrzeit) einen Sicherheitsschlüssel generieren kann. Somit kann der Ausgangswert auch als ein Seed bezeichnet werden.

Gemäß einem weiteren Aspekt der vorliegenden Erfindung wird die zweite Information in Abhängigkeit einer Uhrzeit bereitgestellt. Dies hat den Vorteil, dass ein Zeitstempel erzeugt werden kann, der dann eine bestimmte Gültigkeit aufweisen kann. Somit wird also die zweite Information nicht stets statisch bereitgestellt. Somit kann also mit einfachen technischen Mitteln ein dynamisches Bereitstellen der zweiten Information erfolgen. Im einfachsten Fall liegt die zweite Information als eine Uhrzeit vor, wobei die Uhrzeit auch gemäß weiterer Algorithmen in die zweite Information umgewandelt werden kann. Somit wird auch sichergestellt, dass bei einem mehrmaligen Durchlaufen des vorgeschlagenen Verfahrens die zweite Information jeweils unterschiedlich ist, was einen weiteren Sicherheitsaspekt darstellt.

Gemäß einem weiteren Aspekt der vorliegenden Erfindung ist der erzeugte Sicherheitsschlüssel für einen vordefinierten absoluten Zeitraum gültig. Dies hat den Vorteil, dass wiederum ein Sicherheitsmerkmal implementiert wird, derart, dass der Sicherheitsschlüssel innerhalb eines bestimmten Zeitraums Verwendung finden muss oder ansonsten nicht mehr akzeptiert wird. Bei einem absoluten Zeitraum kann beispielsweise ein Datum bzw. eine Uhrzeit bestimmt werden, ab der der Sicherheitsschlüssel nicht mehr verwendet werden kann. Somit ist es also trotz des einfach ausgestalteten Wertdokuments möglich, komplexe Sicherheitsfunktionen bereitzustellen und zudem keinen statischen Sicherheitsschlüssel bereitzustellen, sondern in Abhängigkeit einer Uhrzeit und einer Gültigkeit dynamisch einen Sicherheitsschlüssel bereitzustellen. Hierdurch wird beispielsweise vermieden, dass ein Angriff stattfindet, falls das mobile Endgerät verlorengeht, da ein bereits erzeugter Sicherheitsschlüssel nach einer gewissen Zeit seine Gültigkeit verliert. Die Gültigkeit wird von einem weiteren, externen Gerät abgeprüft, welches mit dem sogenannten Point of Sale verbunden ist.

Gemäß einem weiteren Aspekt der vorliegenden Erfindung führt das mobile Endgerät das Erzeugen des Sicherheitsschlüssels im Zusammenwirken mit einem Server durch. Dies hat den Vorteil, dass komplexe Steuerbefehle auf einen externen Server ausgelagert werden können und somit auch komplexe Sicherheitsalgorithmen Verwendung finden können. Hierzu benutzt das mobile Endgerät lediglich die Datenkommunikation zu dem Server, und der Server kann entsprechende Algorithmen bereitstellen und diese dann ausführen. Somit ist es also auch möglich, dass der Algorithmus, der zur Erzeugung des Sicherheitsschlüssels verwendet wird, auch ausgetauscht werden kann, ohne dass dies der Benutzer mitbekommt. Folglich können auch Updates eingespielt werden, die nicht auf das mobile Endgerät übertragen werden müssen.

Gemäß einem weiteren Aspekt der vorliegenden Erfindung erfolgt das Erzeugen des Sicherheitsschlüssels unter Verwendung einer kryptographischen Hash-Funktion. Dies hat den Vorteil, dass besonders sichere Algorithmen, wie beispielsweise der "Time-based One-Time Password Algorithmus" verwendet werden können. Dieser sogenannte TOTP-Algorithmus basiert auf dem OATH-Algorithmus, was vorliegend jedoch nicht als einschränkend verstanden werden soll.

Gemäß einem weiteren Aspekt der vorliegenden Erfindung findet der erzeugte Sicherheitsschlüssel bei einer Authentisierung Verwendung. Dies hat den Vorteil, dass das vorliegende Verfahren in ein Bezahlsystem derart eingebunden werden kann, dass der erfindungsgemäß erzeugte Sicherheitsschlüssel beispielsweise wie der bekannte Card Validation Code CVC verwendet werden kann. Somit findet der Sicherheitsschlüssel bei einem Bezahlvorgang Verwendung und der Bezahlvorgang wird in Abhängigkeit eines korrekten Bereitstellens des Sicherheitsschlüssels durchgeführt bzw., falls der Sicherheitsschlüssel nicht korrekt bereitgestellt wird, abgebrochen.

Gemäß einem weiteren Aspekt der vorliegenden Erfindung ist die erste Information derart auf dem Wertdokument hinterlegt, dass diese nicht optisch auslesbar ist. Dies hat den Vorteil, dass ein weiteres Sicherheitsmerkmal umgesetzt wird, nämlich derart, dass die erste Information nicht ohne technische Hilfsmittel ausgelesen werden kann. Somit ist es insbesondere nicht möglich, dass ein Benutzer mit dem unbewaffneten Auge die erste Information aus einer Kreditkarte ausliest.

Gemäß einem weiteren Aspekt der vorliegenden Erfindung wird das Wertdokument als ein kartenförmiges oder ein buchartiges Wertdokument bereitgestellt. Dies hat den Vorteil, dass herkömmliche Kreditkarten oder Passbücher aufgewertet und erfindungsgemäß in dem Verfahren verwendet werden können. Somit können im Grunde genommen jegliche Wertdokumente Verwendung finden, solange sich die leitfähige Struktur aufdrucken lässt. Hierbei kennt der Fachmann weitere Wertdokumente, wie beispielsweise Zugangskarten, Ausweisdokumente und dergleichen.

Die Aufgabe wird ferner gelöst durch eine Systemanordnung zum dynamischen Generieren eines Sicherheitsschlüssels unter Verwendung eines einfach ausgestalteten Wertdokuments, umfassend das Wertdokument, welches eingerichtet ist zum Bereitstellen einer auf dem Wertdokument hinterlegten ersten Information an ein mobiles Endgerät mittels einer direkten Kommunikationsschnittstelle zwischen dem Wertdokument und dem mobilen Endgerät, das mobile Endgerät, welches eingerichtet ist zum Erzeugen eines Sicherheitsschlüssels durch das mobile Endgerät in Abhängigkeit der bereitgestellten ersten Information und einer, auf dem mobilen Endgerät abgespeicherten, zweiten Information, und ferner eingerichtet ist zum optischen Ausgeben des erzeugten Sicherheitsschlüssels.

Die Aufgabe wird alternativ gelöst durch ein Computerprogrammprodukt mit Steuerbefehlen, welche das Verfahren ausführen bzw. die vorgeschlagene Systemanordnung betreiben.

Erfindungsgemäß ist es vorteilhaft, dass das Verfahren Verfahrensschritte bereitstellt, welche auch von dem Computerprogrammprodukt umgesetzt werden können bzw. sich als strukturelle Merkmale der Systemanordnung umsetzen lassen. Ferner ist es möglich, dass die strukturellen Merkmale der Systemanordnung auch als Verfahrensschritte implementiert werden können. Das Computerprogrammprodukt dient sowohl dem Ausführen des Verfahrens als auch dem Betreiben der Systemanordnung.

Weitere vorteilhafte Ausgestaltungen werden anhand der beigefügten Figuren näher erläutert. Es zeigen:
- Fig. 1:: ein schematisches Ablaufdiagramm eines Verfahrens zum dynamischen Generieren eines Sicherheitsschlüssels gemäß einem Aspekt der vorliegenden Erfindung;
- Fig. 2:: ein schematisches Anwendungsszenario der vorliegenden Erfindung mit einer Luftschnittstelle (kontaktlos, z.B. NFC) gemäß einem Aspekt der vorliegenden Erfindung;
- Fig. 3:: ein bevorzugtes Ausführungsbeispiel des erfindungsgemäßen Verfahrens mit einer Datenübertragung anhand einer leitfähigen Struktur und eines kapazitiven Displays gemäß einem weiteren Aspekt der vorliegenden Erfindung; und
- Fig. 4: ein weiteres bevorzugtes Ausführungsbeispiel des erfindungsgemäßen Verfahrens mit einer Datenübertragung anhand einer leitfähigen Struktur und eines kapazitiven Displays gemäß einem weiteren Aspekt der vorliegenden Erfindung.

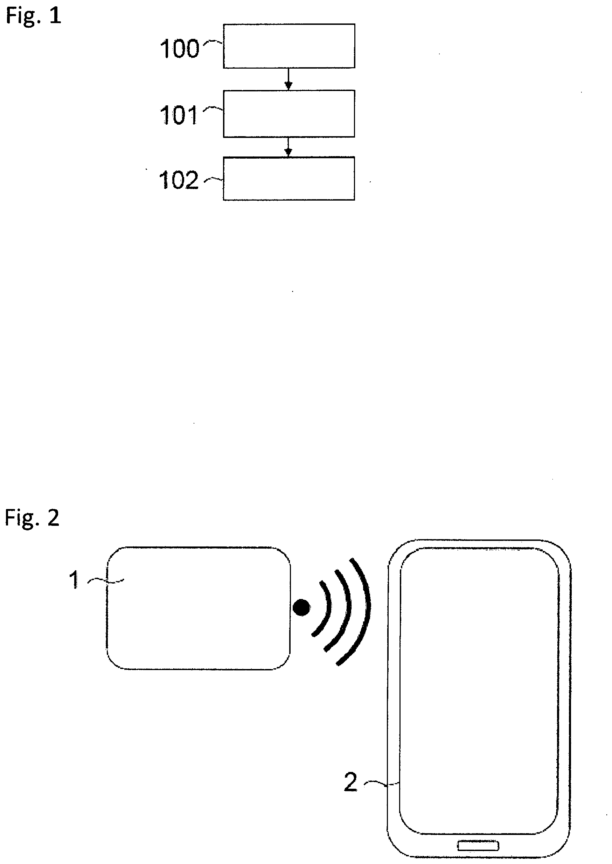

Fig. 1 zeigt in einem schematischen Ablaufdiagramm ein Verfahren zum dynamischen Generieren eines Sicherheitsschlüssels unter Verwendung eines einfach ausgestalteten Wertdokuments, umfassend ein Bereitstellen 100 einer auf dem Wertdokument hinterlegten ersten Information an ein mobiles Endgerät mittels einer direkten Kommunikationsschnittstelle zwischen dem Wertdokument und dem mobilen Endgerät, ein Erzeugen 101 eines Sicherheitsschlüssels durch das mobile Endgerät in Abhängigkeit der bereitgestellten 100 ersten Information und einer, auf dem mobilen Endgerät abgespeicherten, zweiten Information, und ein optisches Ausgeben 102 des erzeugten Sicherheitsschlüssels durch das mobile Endgerät. Der Fachmann erkennt hierbei, dass die Verfahrensschritte iterativ und/oder in anderer Reihenfolge ausgeführt werden können. Beispielsweise kann die zweite Information gleichzeitig mit der ersten Information bereitgestellt werden, wobei es vorteilhaft ist, dass das Bereitstellen der ersten Information das vorgeschlagene Verfahren auslöst. Ferner können weitere Verfahrensschritte vorgesehen werden, die das vorgeschlagene Verfahren in ein Bezahlsystem eingliedern.

Fig. 2 zeigt in einem beispielhaften Ausführungsbeispiel eine Kreditkarte 1, welche die erste Information mittels einer Luftschnittstelle an ein Smartphone 2 überträgt. Hierbei kann es sich beispielsweise um eine Nahfeldschnittstelle, auch als Near Field Communication NFC, handeln. Hierbei handelt es sich lediglich um ein optionales Ausführungsbeispiel.

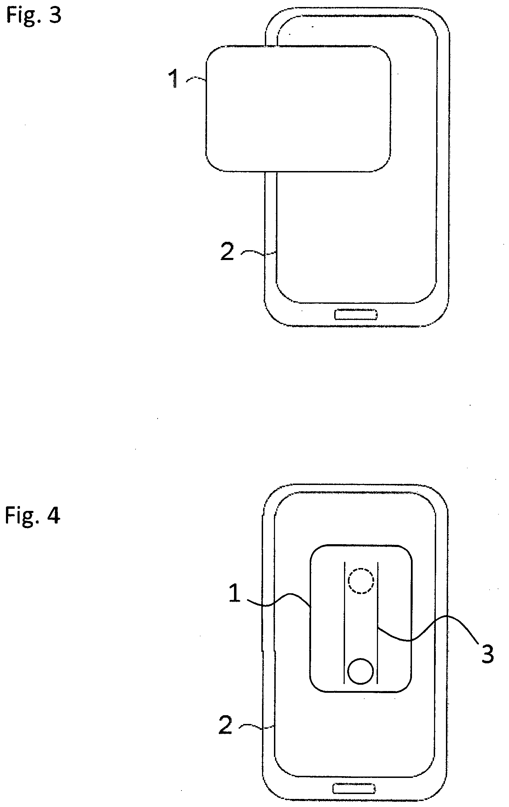

Fig. 3 zeigt ein besonders bevorzugtes Ausführungsbeispiel, wobei eine Kreditkarte 1, also ein Wertdokument, in Kontakt mit einem Smartphone 2, also einem mobilen Endgerät, gebracht wird.

Hierbei ist auf bzw. in der Kreditkarte 1 eine leitfähige Struktur angebracht, die vorliegend nicht gezeigt ist, da diese in dem gezeigten Ausführungsbeispiel dem kapazitiven Display des Smartphones 2 zugewandt ist. Bei dem Smartphone 2 handelt es sich um ein Smartphone, welches mit einem kapazitiven Display ausgestaltet ist, vorzugsweise einem Multitouch-Display. Die leitfähige Struktur der Kreditkarte 1 wird mit diesem Display in Kontakt gebracht (bspw. durch Auflegen auf das Display), wodurch es dem mobilen Endgerät möglich ist, die mittels der leitfähigen Struktur gespeicherte erste Information auszulesen. Somit handelt es sich also um ein Verfahren, welches es ermöglicht, dass der Benutzer seine Kreditkarte auf das Smartphone auflegt und somit in einfacher Art und Weise die erste Information bereitstellt. Die erste Information wird dabei mit Vorteil derart bereitgestellt, dass der Nutzer die Karte im Bereich der leitfähigen Struktur berührt während die die leitfähige Struktur aufweisende Karte auf das Display des Smartphones 2 aufgelegt wird.

Auf dem Smartphone kann eine Applikation hinterlegt werden, die ein solches Übertragen der ersten Information erkennt und somit automatisiert Steuerbefehle ausführt, die die leitende Struktur auf der Kreditkarte auslesen. Somit bekommt das Smartphone alle Daten übermittelt, die es zum Erzeugen des Sicherheitsschlüssels benötigt.

Nach dem Erzeugen des Sicherheitsschlüssels erfolgt ein Bereitstellen des erzeugten Sicherheitsschlüssels mittels des Displays. Somit kann der Benutzer die dynamisch generierte Information, also den Sicherheitsschlüssel, auslesen und kann diesen Sicherheitsschlüssel bei einem Point of Sale, beispielsweise einem Kassensystem, angeben.

Somit wird also der zu der Kreditkarte gehörende CVC dynamisiert bereitgestellt, wobei sichergestellt wird, dass die Kreditkarte vorhanden ist. Dies erhöht das Vertrauen in den CVC bis hin zu der Vertrauensstufe einer Card Present Transaction. Dazu kann eine Technologie zum Einsatz kommen, bei der ein leitender Code auf der Kreditkarte aufgebracht wird. Legt man die Karte auf das kapazitive Display eines Mobiltelefons, so ist es möglich, eine Information, bevorzugt mit Hilfe einer geeigneten Applikation, die in Kenntnis des jeweiligen Mobiltelefons ist, auszulesen. Aus dieser Information soll in Verbindung mit der aktuellen Uhrzeit im Mobiltelefon der dynamische CVC erzeugt werden. Hierbei ist es ausreichend, die Uhrzeit im Mobiltelefon zu verwenden, da der erzeugte CVC zeitlich nur begrenzt gültig sein soll. Hierbei bezeichnet CVC lediglich ein Beispiel für einen Sicherheitsschlüssel. Konkret kann als der leitende Code ein sogenannter Touchcode Verwendung finden.

Das vorgeschlagene Verfahren lässt sich gemäß einem Aspekt der vorliegenden Erfindung wie folgt vorschlagen.

Eine in einem tragbaren Datenträger, also einem Wertdokument wie einer Kreditkarte, versteckte Information wird bereitgestellt. Versteckt bedeutet hierbei, dass diese Information nicht ohne Weiteres vom unbewaffneten Auge auslesbar ist. Diese Information ist jedoch per Smartphone auslesbar. Als Beispiel wird hier auf die sogenannte Touchcode-Technologie verwiesen, deren Code mittels kapazitivem Display eines Smartphones ausgelesen werden kann. Eine Applikation auf dem Smartphone kennt die aktuelle Uhrzeit und kann einen sogenannten Timestamp erzeugen. Die aus der Chipkarte ausgelesene versteckte Information wird als Seed verwendet. Mittels des Seeds und der aktuellen Uhrzeit wird auf dem Smartphone oder aber auf einem Server zu dem dieser Seed ggf. verschlüsselt geschickt wurde, eine dynamische CVC errechnet und auf dem Display des Smartphones angezeigt. Hierbei kann beispielsweise der Time-based One-Time Password Algorithmus TOTP z. B. basierend auf dem OATH-Algorithmus verwendet werden.

Hierbei ist von Vorteil, dass eine dynamische CVC bzw. ein Sicherheitsschlüssel bereitgestellt werden kann, ohne dass dies eine Batterie in der Karte voraussetzt. Dies ist unbedenklich für die Umwelt und mit geringem technischen Aufwand zu bewerkstelligen. Ferner ist kein Display bzw. eine Elektronik in dem Wertdokument vorzuhalten. Somit wird eine robuste Kreditkarte möglich, welche mit einfachen technischen Mitteln herzustellen ist und besonders zuverlässig arbeitet. Ferner ist es möglich, ohne Verwendung der aktuellen Uhrzeit auch nur eine statische Information auf dem Display des Smartphones anzuzeigen, die nicht direkt auf der Karte sichtbar sein soll. Als Beispiel sei auf die Card Access Number CAN von Ausweisdokumenten verwiesen.

Somit erfolgt erfindungsgemäß also ein dynamisches Bereitstellen eines Sicherheitsschlüssels, ohne dass das Wertdokument hierbei eine aufwendige Elektronik vorhalten muss.

Fig. 4 zeigt ein weiteres besonders bevorzugtes Ausführungsbeispiel, wobei eine Kreditkarte 1, also ein Wertdokument, in Kontakt mit einem Smartphone 2, also einem mobilen Endgerät, gebracht wird.

Hierbei ist auf bzw. in der Kreditkarte 1 eine leitfähige Struktur angebracht. Bei dem Smartphone 2 handelt es sich um ein Smartphone, welches mit einem kapazitiven Display ausgestaltet ist, vorzugsweise einem Multitouch-Display. Die Kreditkarte 1 wird auf das Display aufgelegt. Anschließend führt ein Nutzer ein Gliedmaß, bevorzugt einen Finger, über eine auf die Kreditkarte aufgedruckte Fingerführungsmarkierung 3. Durch die Bewegung des Gliedmaßes über die im Bereich der Fingerführungsmarkierung 3 angeordnete leitfähige Struktur ist es dem mobilen Endgerät möglich, die mittels der leitfähigen Struktur gespeicherte erste Information auszulesen. Somit handelt es sich also um ein Verfahren, welches es ermöglicht, dass der Benutzer seine Kreditkarte auf das Smartphone auflegt, anschließend mit seinem Finger darüberfährt und somit in einfacher Art und Weise die erste Information bereitstellt.

## Patentansprüche

1. Verfahren zum dynamischen Generieren eines Sicherheitsschlüssels unter Verwendung eines einfach ausgestalteten Wertdokuments (1), umfassend:
- Bereitstellen (100) einer auf dem Wertdokument (1) hinterlegten ersten Information an ein mobiles Endgerät (2) mittels einer direkten Kommunikationsschnittstelle zwischen dem Wertdokument (1) und dem mobilen Endgerät (2);
- Erzeugen (101) eines Sicherheitsschlüssels durch das mobile Endgerät (2) in Abhängigkeit der bereitgestellten (100) ersten Information und einer, auf dem mobilen Endgerät (2) abgespeicherten, zweiten Information; und
- optisches Ausgeben (102) des erzeugten Sicherheitsschlüssels durch das mobile Endgerät (2).

2. Verfahren nach Anspruch 1, **dadurch gekennzeichnet, dass** die direkte Kommunikationsschnittstelle als eine nicht-kontaktbehaftete Schnittstelle vorliegt.

3. Verfahren nach Anspruch 1 oder 2, **dadurch gekennzeichnet, dass** das Bereitstellen (100) der ersten Information mittels eines Auslesens einer leitfähigen Struktur auf dem Wertdokument erfolgt.

4. Verfahren nach Anspruch 3, **dadurch gekennzeichnet, dass** das Auslesen der ersten Information unter Verwendung eines kapazitiven Displays des mobilen Endgeräts (2) erfolgt, welches in Kontakt mit der leitfähigen Struktur gebracht wird.

5. Verfahren nach einem der vorhergehenden Ansprüche, **dadurch gekennzeichnet, dass** die erste Information einen Ausgangswert für ein Rechenverfahren zur Generierung des Sicherheitsschlüssels darstellt.

6. Verfahren nach einem der vorhergehenden Ansprüche, **dadurch gekennzeichnet, dass** die zweite Information in Abhängigkeit einer Uhrzeit bereitgestellt wird.

7. Verfahren nach einem der vorhergehenden Ansprüche, **dadurch gekennzeichnet, dass** der erzeugte (101) Sicherheitsschlüssel für einen vordefinierten absoluten oder relativen Zeitraum gültig ist.

8. Verfahren nach einem der vorhergehenden Ansprüche, **dadurch gekennzeichnet, dass** das mobile Endgerät (2) das Erzeugen (101) des Sicherheitsschlüssels im Zusammenwirken mit einem Server durchführt.

9. Verfahren nach einem der vorhergehenden Ansprüche, **dadurch gekennzeichnet, dass** das Erzeugen (101) des Sicherheitsschlüssels unter Verwendung einer kryptografischen Hash-Funktion erfolgt.

10. Verfahren nach einem der vorhergehenden Ansprüche, **dadurch gekennzeichnet, dass** der erzeugte (101) Sicherheitsschlüssel bei einer Authentisierung oder einer Autorisierung Verwendung findet.

11. Verfahren nach einem der vorhergehenden Ansprüche, **dadurch gekennzeichnet, dass** die erste Information derart auf dem Wertdokument (1) hinterlegt wird, dass diese nicht optisch auslesbar ist.

12. Verfahren nach einem der vorhergehenden Ansprüche, **dadurch gekennzeichnet, dass** das Wertdokument (1) als ein kartenförmiges oder ein buchartiges Wertdokument (1) bereitgestellt wird.

13. Systemanordnung zum dynamischen Generieren eines Sicherheitsschlüssels unter Verwendung eines einfach ausgestalteten Wertdokuments (1), umfassend:
- das Wertdokument (1), welches eingerichtet ist zum Bereitstellen (100) einer auf dem Wertdokument (1) hinterlegten ersten Information an ein mobiles Endgerät (2) mittels einer direkten Kommunikationsschnittstelle zwischen dem Wertdokument (1) und dem mobilen Endgerät (2);
- das mobile Endgerät (2), welches eingerichtet ist zum Erzeugen (101) eines Sicherheitsschlüssels in Abhängigkeit der bereitgestellten (100) ersten Information und einer, auf dem mobilen Endgerät (2) abgespeicherten, zweiten Information; und ferner eingerichtet ist zum
- optischen Ausgeben (102) des erzeugten Sicherheitsschlüssels.

14. Computerprogrammprodukt mit Steuerbefehlen, welche das Verfahren gemäß einem der Ansprüche 1 bis 12 ausführen, wenn sie auf einem Computer zur Ausführung gebracht werden.
